# EUROPÄISCHE PATENTANMELDUNG

(11) **EP 0 988 781 A2**
(43) Veröffentlichungstag der Anmeldung: **29.03.2000**
(21) Anmeldenummer: 99116966.5
(22) Anmeldetag: 27.08.1999
(51) Int. Cl.: A01C 17/00

(54) **Verfahren zum Einsatz eines Zentrifugaldüngerstreuers**

(30) Priorität: 24.09.1998 DE 19843791
(71) Anmelder: Amazonen-Werke H. Dreyer GmbH & Co. KG, 49205 Hasbergen (DE)
(72) Erfinder: Dreyer, Heinz, Dr. Dipl.-Ing, 49205 Hasbergen (DE); Scheufler, Bernd, Dr. Ing., 49205 Hasbergen (DE)

(57) **Zusammenfassung**

Verfahren zum Einsatz eines Zentrifugaldüngerstreuers (1) mit einem Vorratsbehälter (3) und um aufrechte Achsen rotierend antreibbaren und mit Wurfschaufeln besetzten Schleuderscheiben (9), denen das im Vorratsbehälter befindliche Düngermaterial in einstellbaren Mengen über Dosierorgane zuführbar ist. Der Zentrifugaldüngerstreuer (1) wird zur Erreichung der erforderlichen Abwurfgeschwindigkeit der Düngerpartikel zur Erzielung einer vorgesehenen Arbeitsbreite bei druckunempfindlichen Düngermaterialsorten Schleuderscheiben (9), deren Wurfschaufelenden (11',12') einen kleineren äußeren Umlaufkreis beschreiben und mit einer relativ hohen Schleuderscheibendrehzahl angetrieben werden und bei druckempfindlichen Düngermaterialsorten Schleuderscheiben (9'), deren Wurfschaufelenden (13',14') einen größeren äußeren Umlaufkreis beschreiben und mit einer herabgesetzten Schleuderscheibendrehzahl angetrieben werden, eingesetzt.

## Beschreibung

Die Erfindung betrifft ein Verfahren zum Einsatz eines Zentrifugaldüngerstreuers gemäß des Oberbegriffes des Patentanspruches 1.

Durch die DE-OS 38 09 872 ist ein Verfahren zum Einsatz eines Zentrifugaldüngerstreuers bekannt, bei dem verschiedene Wurfschaufelsätze auf den Schleuderscheibenantriebswellen anzuordnen sind, um unterschiedliche Arbeitsbreiten zu erreichen. In dieser Druckschrift ist ein Stand der Technik geschildert, bei dem ein Schleuderdüngerstreuer bekannt ist, deren Schleuderscheiben über einen ölhydraulischen Antrieb antreibbar sind.

Bei dem bekannten Schleuderdüngerstreuer werden die Schleuderscheiben mit konstanter Drehzahl angetrieben. Die Festlegung der Arbeitsbreitenbereiche geschieht durch die unterschiedlich langen Wurfschaufeln der verschiedenen Schleuderscheibensätze bzw. durch die jeweilige Drehzahl der Schleuderscheiben. Wenn mit dem Zentrifugaldüngerstreuer druckempfindliche Materialien ausgebracht werden und die Schleuderscheiben mit relativ hoher Drehzahl rotieren, werden die Düngerkörner der druckempfindlichen Materialien zerschlagen, so daß der Dünger quasi pulverisiert wird. In derartigen Fällen 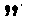 staubt" es sehr stark. Auch ist die Düngerverteilung in diesen Fällen sehr schlecht, so daß es zu Düngeranhäufungen in der Arbeitsbreitenmitte kommt.

Der Erfindung liegt die Aufgabe zugrunde, mit einfachen Maßnahmen ein Verfahren zum Einsatz eines Zentrifugaldüngerstreuers zu schaffen, um auch druckempfindliche Materialien, ohne daß diese von den Wurfschaufeln zerschlagen werden, mit einer guten Düngerverteilung verteilen zu können.

Diese Aufgabe wird erfindungsgemäß durch die kennzeichnenden Merkmale des Patentanspruches 1 gelöst. Infolge dieser Maßnahmen werden auch die druckempfindlichen Materialien schonend beschleunigt und mit einer gleichmäßigen Düngerverteilung auf dem Acker verteilt.

In einer Weiterbildung der Erfindung ist vorgesehen, daß die Schleuderscheiben mittels Antriebsmotoren, deren Antriebsdrehzahl stufenlos einstellbar ist, angetrieben werden, und daß eine Regeleinrichtung vorgesehen ist, in welcher zur Erzielung vorgegebener Arbeitsbreiten zumindest jeweils zwei Drehzahl-Schaufellängenpaarungen eingespeichert ist, um je nach auszubringender Materialsorte (druckempfindlich oder weniger druckempfindlich) die optimale Schaufellängendrehzahlpaarung für die zu erreichende Arbeitsbreite einstellen zu können. Infolge dieser Maßnahmen wird über die Regeleinrichtung die richtige Drehzahl für die entsprechende Schaufellänge und die gewünschte Arbeitsbreite eingestellt.

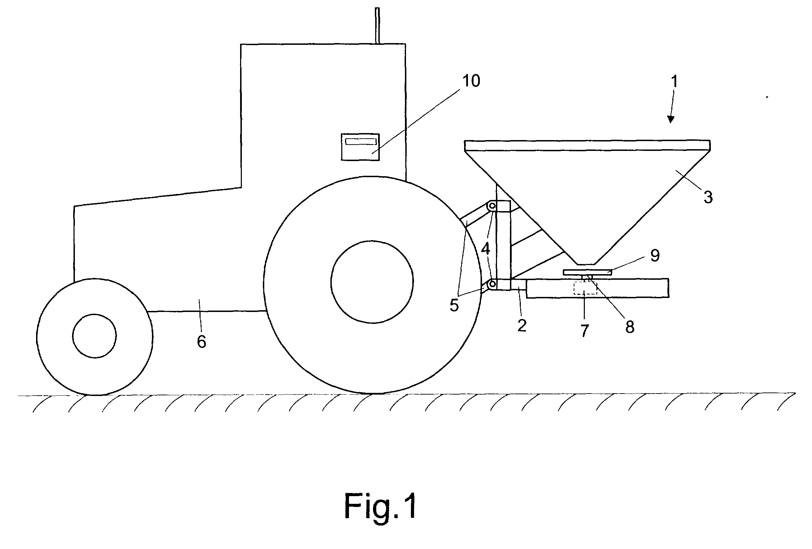

Weitere Einzelheiten der Erfindung sind den übrigen Unteransprüchen, der Beispielsbeschreibung und den Zeichnungen zu entnehmen. Hierbei zeigen
- Fig.1: den Schleuderdüngerstreuer in Seitenansicht,

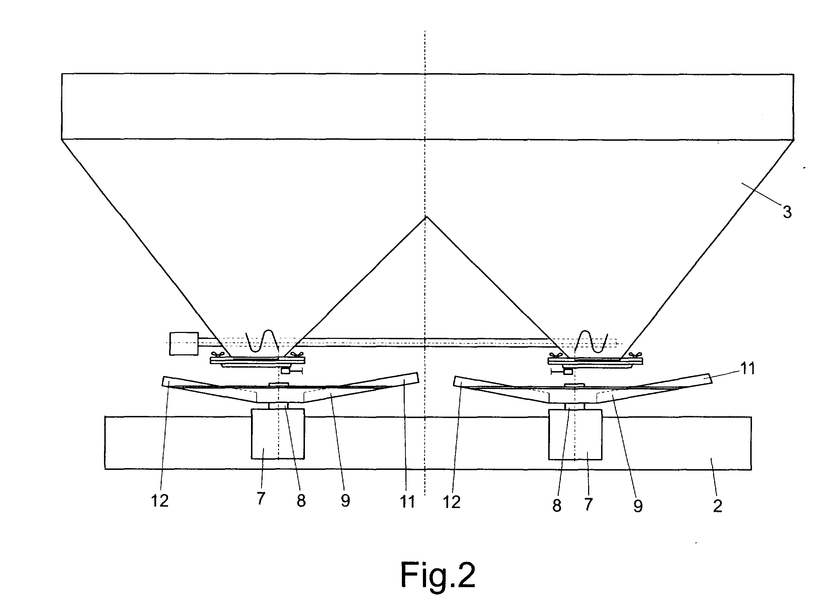

- Fig.2: den Düngerstreuer in der Ansicht von hinten,
- Fig.3: ein erstes Schleuderscheibenpaar und
- Fig.4: ein weiteres Schleuderscheibenpaar.

Der Schleuderdüngerstreuer 1 weist den Rahmen 2 und den Vorratsbehälter 3 auf. Auf der Vorderseite des Rahmens 2 sind die Dreipuntkupplungselemente 4 angeordnet, über welche der Schleuderdüngerstreuer an den Dreipunktkraftheber 5 eines Ackerschleppers 6 angeordnet ist. An dem Rahmen 2 des Schleuderdüngerstreuers 1 sind beabstandet zueinander zwei Ölmotoren 7 angeordnet, deren Antriebswelle 8 vertikal angeordnet ist und nach oben weist. Auf diesen Antriebswellen 8 sind die Schleuderscheiben 9 mittels geeigneter Flanschelemente abnehmbar angeordnet. Die hydraulischen Motoren 7 werden über eine eigene Ölpumpe oder von der Schlepperhydraulikanlage in einstellbaren Drehzahlen angetrieben. Den Ölmotoren 7 sind Einstellelemente zur Einstellung ihrer Drehzahl zugeordnet. Diese Einstellelemente sind mit einer Regeleinrichtung 10 verbunden.

In der Regeleinrichtung 10 sind die vorgegebenen Arbeitsbreiten und zumindest zwei Drehzahlen - Schaufellängenpaarungen eingespeichert, um nach je auszubringender Materialsorte (druckempfindlich oder weniger druckempfindlich) die optimale Schaufellängendrehzahlpaarung für die zu erreichende Arbeitsbreite einstellen zu können. Hierbei sind jedem Drehzahlschaufellängenverhältniss eine Druckempfindlichkeitsstufe der auszubringenden Materialien zugeordnet. Desweiteren sind in dem Rechner 10 die Gruppe der Druckempfindlichkeit der Materialsorten über eine Eingabevorrichtung einzugeben und aufgrund der eingegebenen Materialsortengruppe zeigt der Rechner 10 die erforderliche Schaufellängendrehzahlpaarung an.

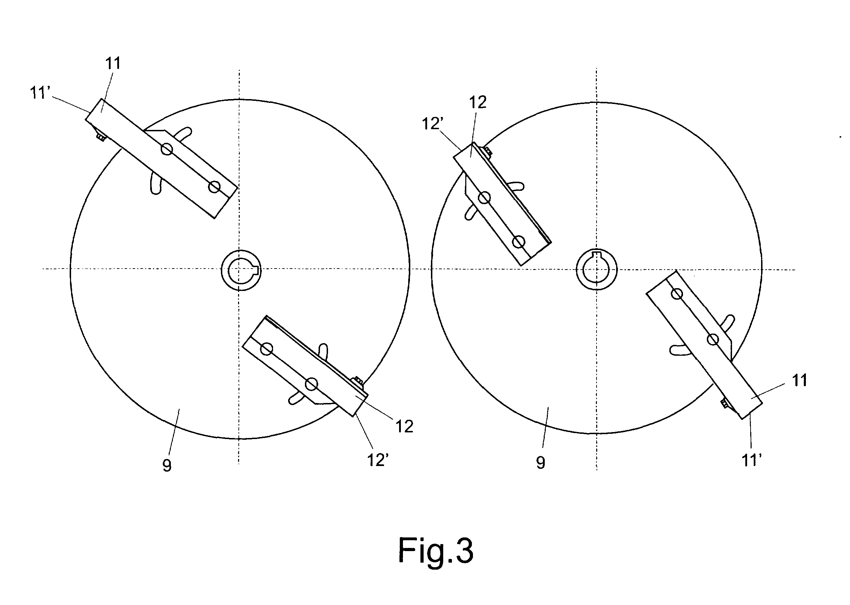

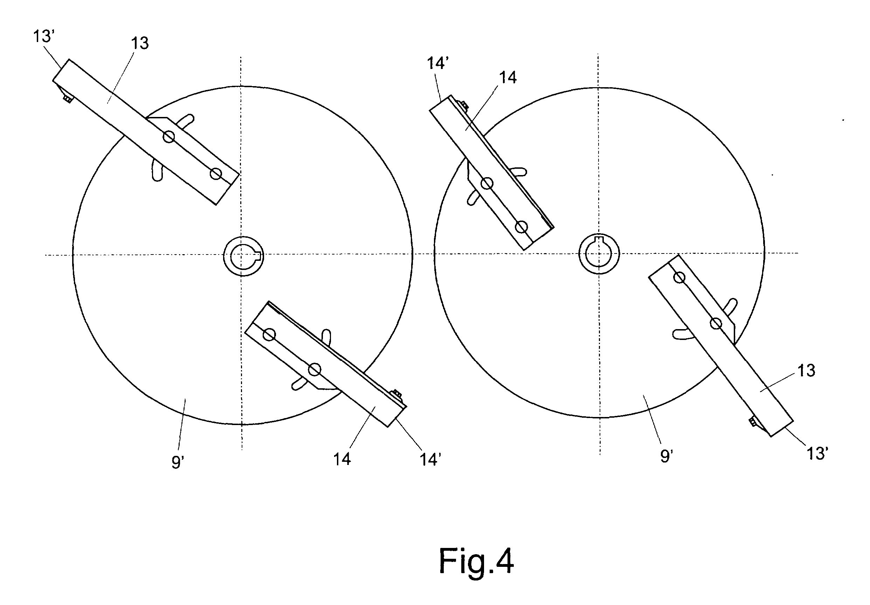

Wenn druckunempfindliche Materialien ausgebracht werden, werden die Schleuderscheiben 9 mit einer relativ hohen Drehzahl angetrieben. Hierbei sind dann Schleuderscheiben 9 mit Wurfschaufeln 11 und 12, die eine relativ kurze Länge (siehe Fig.3) aufweisen, vorgesehen, um die vorgegebene Arbeitsbreite zu erreichen. Wenn nun druckempfindliche Düngermaterialsorten ausgebracht werden, werden die Schleuderscheiben 9 mit den Wurfschaufeln 11 und 12 gemäß Fig.3 abgenommen und die Schleuderscheiben 9' mit den Wurfschaufeln 13 und 14 gemäß Fig.4 auf den Kupplungselementen der Schleuderscheibenantriebswellen 8 angeordnet. Die Enden 13' und 14' der Wurfschaufeln 13 und 14 dieser Schleuderscheibe 9' beschreiben einen größeren äußeren Umlaufkreis als die Enden 11' und 12' der Wurfschaufeln 11 und 12 der Schleuderscheiben 9 gemäß Fig.3. Gleichzeitig werden über die Regeleinrichtung 10, durch eine entsprechende Eingabe der Materialsorte, die ausgebracht werden soll, und die zu erreichende Arbeitsbreite die Schleuderscheibendrehzahl durch Verstellung der Einstellelemente der ölhydraulischen Motore 7 herabgesetzt.

Die Funktionsweise des Verfahrens ist also folgende:

Wenn druckunempfindliche Düngermaterialsorten ausgebracht werden, werden die Schleuderscheiben 9 mit einer höheren Drehzahl angetrieben, während die Schleuderscheiben 9', wenn druckempfindliche Materialsorten ausgebracht werden, mit einer geringeren Drehzahl angetrieben werden. Um jedoch die gleiche Arbeitsbreite sowohl bei dem Ausbringen von druckempfindlichen wie bei druckunempfindlichen Düngermaterialsorten zu erreichen, wird eine Anpassung durch die Länge der Wurfschaufeln 11, 12, 13, 14, bzw. deren Umlaufkreis der Wurfschaufelenden 11', 12', 13', 14' gewährleistet. Diese bedeutet, daß bei Ausbringung druckempfindlicher Materialien mit langen Wurfschaufeln 13, 14 und geringerer Drehzahl und bei druckunempfindlichen Materialien mit kürzeren Wurfschaufeln 11, 12 und höherer Drehzahl gearbeitet wird. Hierbei sind in der Regeleinrichtung 10 die Zusammenhänge zwischen Arbeitsbreite und Drehzahl-Schaufellängenpaarung entsprechend der Druckempfindlichkeit der auszubringenden Materialsorten eingespeichert. In dem Rechner 10 können verschiedene Programme, z.B. ein granulatschonendes Programm oder ein für druckunempfindliche Düngersorten geeigneten Programm abgespeichert sein.

## Patentansprüche

1. Verfahren zum Einsatz eines Zentrifugaldüngerstreuers mit einem Vorratsbehälter und um aufrechte Achsen rotierend antreibbaren und mit Wurfschaufeln besetzten Schleuderscheiben, denen das im Vorratsbehälter befindliche Düngermaterial in einstellbaren Mengen über Dosierorgane zuführbar ist, dadurch gekennzeichnet, daß der Zentrifugaldüngerstreuer (1) zur Erreichung der erforderlichen Abwurfgeschwindigkeit der Düngerpartikel zur Erzielung einer vorgesehenen Arbeitsbreite bei druckunempfindlichen Düngermaterialsorten Schleuderscheiben (9), deren Wurfschaufelenden (11', 12') einen kleineren äußeren Umlaufkreis beschreiben und mit einer relativ hohen Schleuderscheibendrehzahl angetrieben werden und bei druckempfindlichen Düngermaterialsorten Schleuderscheiben (9'), deren Wurfschaufelenden (13', 14') einen größeren äußeren Umlaufkreis beschreiben und mit einer herabgesetzten Schleuderscheibendrehzahl angetrieben werden, eingesetzt wird.

2. Verfahren nach Anspruch 1, dadurch gekennzeichnet, daß die Schleuderscheiben (9, 9') mittels Antriebsmotoren (7), deren Antriebsdrehzahl stufenlos einstellbar ist, angetrieben werden, und daß eine Regeleinrichtung (10) vorgesehen ist, in welcher zur Erzielung vorgegebener Arbeitsbreiten zumindest jeweils zwei Drehzahl-Schaufellängenpaarungen eingespeichert ist, um je nach auszubringender Materialsorte (druckempfindlich oder weniger druckempfindlich) die optimale Schaufellängendrehzahlpaarung für die zu erreichende Arbeitsbreite einstellen zu können.

3. Verfahren nach einem oder mehreren der vorstehenden Ansprüche, dadurch gekennzeichnet, daß jedem Drehzahl-Schaufellängenverhältniss eine Druckempfindlichkeitsstufe der auszubringenden Materialsorten zugeordnet ist.

4. Verfahren nach einem oder mehreren der vorstehenden Ansprüche, dadurch gekennzeichnet, daß in den Rechner (10) die Gruppe der Druckempfindlichkeit der Materialsorten eingebbar ist, und daß aufgrund der eingegebenen Materialsortengruppe der Rechner das erforderliche Scheibenlängen-Drehzahlpaarung anzeigt.
